# EUROPÄISCHE PATENTSCHRIFT

(11) **EP 3 898 048 B1**
(45) Veröffentlichungstag und Bekanntmachung des Hinweises auf die Patenterteilung: **28.06.2023**
(21) Anmeldenummer: 19820724.3
(22) Anmeldetag: 10.12.2019
(51) Int. Cl.: B23D 45/04, B25F 5/02, B23D 47/00, B27B 5/29

(54) **WERKZEUGMASCHINE**
MACHINE TOOL
MACHINE OUTIL

(30) Priorität: 18.12.2018 DE 102018222159
(43) Veröffentlichungstag der Anmeldung: 27.10.2021
(73) Patentinhaber: Robert Bosch GmbH, 70442 Stuttgart (DE)
(72) Erfinder: MENZE, Gregory A., Illinois, Illinois 60056 (US); BLAESIUS, Jana, 71638 Ludwigsburg (DE); RINGSHANDL, Tina, 70771 Leinfelden (DE); MARINOV, Plamen V., Illinois, Illinois 60056 (US); FREIBURGER, Philipp, 70563 Stuttgart (DE)
(86) Internationale Anmeldenummer: PCT/EP2019/084434
(87) Internationale Veröffentlichungsnummer: WO 2020/126674

(56) Entgegenhaltungen:
- EP-A2- 3 275 582
- WO-A1-2019/111632
- US-A1- 2015 328 796
- US-B2- 9 827 622

## Beschreibung

### Stand der Technik

In der US 9,827,622 B2 ist bereits eine Werkzeugmaschine, insbesondere eine Kapp- und/oder Gehrungssäge, mit zumindest einem Schwenkarm, mit zumindest einer an dem Schwenkarm angeordneten Antriebseinheit, mit zumindest zwei elektrisch reihenschaltbaren Energiespeichereinheiten, insbesondere Akkupacks, zu einer Energieversorgung der Antriebseinheit und mit zumindest zwei Kopplungseinheiten zu einer Befestigung der Energiespeichereinheiten an dem Schwenkarm, vorgeschlagen worden. Die Kopplungseinheiten sind derart entlang einer Längsachse des Schwenkarms betrachtet versetzt zueinander an dem Schwenkarm angeordnet, dass die Längsachse des Schwenkarms quer, insbesondere zumindest im Wesentlichen senkrecht, zu Kopplungsflächen, insbesondere Haupterstreckungsebenen, der Kopplungseinheiten verläuft.

Eine Werkzeugmaschine gemäß dem Oberbegriff des Anspruchs 1 ist aus US 2015/328796 A1 bekannt.

### Offenbarung der Erfindung

Die Erfindung geht aus von einer Werkzeugmaschine, insbesondere von einer Kapp- und/oder Gehrungssäge, mit zumindest einem Schwenkarm, mit zumindest einer an dem Schwenkarm angeordneten Antriebseinheit, mit zumindest zwei elektrisch reihenschaltbaren Energiespeichereinheiten, insbesondere Akkupacks, zu einer Energieversorgung der Antriebseinheit und mit zumindest zwei Kopplungseinheiten zu einer Befestigung der Energiespeichereinheiten an dem Schwenkarm.

Es wird vorgeschlagen, dass die Kopplungseinheiten entlang einer Längsachse des Schwenkarms betrachtet versetzt zueinander an dem Schwenkarm angeordnet sind, wobei die Längsachse des Schwenkarms zumindest im Wesentlichen parallel zu Kopplungsflächen, insbesondere Haupterstreckungsebenen, der Kopplungseinheiten verläuft.

Bevorzugt ist die Werkzeugmaschine als eine stationäre Werkzeugmaschine, insbesondere verschieden von einer Handwerkzeugmaschine, ausgebildet. Vorzugsweise ist die Werkzeugmaschine als eine Säge, insbesondere als eine Kapp- und/oder Gehrungssäge, ausgebildet. Alternativ ist denkbar, dass die Werkzeugmaschine als eine Schleifmaschine, als eine Hobelmaschine, als eine Standbohrmaschine, als eine Fräsmaschine oder als eine andere, einem Fachmann als sinnvoll erscheinende Werkzeugmaschine ausgebildet ist. Der Schwenkarm ist vorzugsweise zu einer beweglichen Lagerung der Antriebseinheit der Werkzeugmaschine und/oder zumindest einer Werkzeugaufnahme der Werkzeugmaschine, die zu einer Aufnahme eines Bearbeitungswerkzeugs, beispielsweise eines Sägeblatts, eines Fräskopfs, eines Bohrers o. dgl., vorgesehen ist, vorgesehen, insbesondere relativ zu zumindest einer Werkstückauflagefläche der Werkzeugmaschine. Insbesondere ist der Schwenkarm um einen Schwenkpunkt, insbesondere um eine durch den Schwenkpunkt verlaufende Schwenkachse, schwenkbar gelagert, insbesondere an einer Grundeinheit der Werkzeugmaschine. Insbesondere ist die Werkzeugaufnahme an einem dem Schwenkpunkt abgewandten Ende des Schwenkarms angeordnet. Bevorzugt ist die Grundeinheit zu einer Anordnung auf einem Untergrund, beispielsweise einem Fußboden, einem Tisch o. dgl., vorgesehen. Insbesondere kann die Grundeinheit zumindest einen Standfuß, bevorzugt eine Mehrzahl von Standfüßen, zu einer Anordnung auf dem Untergrund aufweisen. Vorzugsweise bildet die Grundeinheit zumindest abschnittsweise die Werkstückauflagefläche der Werkzeugmaschine aus. Insbesondere ist auf der Werkstückauflagefläche zumindest ein mittels der Werkzeugmaschine, insbesondere mittels des Bearbeitungswerkzeugs, zu bearbeitendes Werkstück platzierbar. Insbesondere ist der Schwenkarm, insbesondere das an dem Schwenkarm mittels der Werkzeugaufnahme angeordnete Bearbeitungswerkzeug, durch einen Schwenkvorgang des Schwenkarms um die Schwenkachse in Richtung der Werkstückauflagefläche bewegbar, insbesondere mit einem auf der Werkstückauflagefläche angeordneten Werkstück in Kontakt bringbar. Vorzugsweise ist eine Bearbeitungsebene, insbesondere eine Schneidebene, des Schwenkarms einstellbar. Insbesondere ist der Schwenkarm zu einer Einstellung der Bearbeitungsebene, insbesondere der Schneidebene, des Schwenkarms quer zu der Schwenkachse des Schwenkarms und quer zu der Werkstückauflagefläche neigbar gelagert, insbesondere an der Grundeinheit der Werkzeugmaschine. Insbesondere ist der Schwenkarm um eine zumindest im Wesentlichen parallel zu der Werkstückauflagefläche und quer, insbesondere zumindest im Wesentlichen senkrecht, zu der Schwenkachse des Schwenkarms verlaufende Neigungsachse neigbar gelagert, insbesondere an der Grundeinheit der Werkzeugmaschine. Unter "im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Der Ausdruck "im Wesentlichen senkrecht" soll insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Unter "vorgesehen" soll insbesondere speziell programmiert, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Die Antriebseinheit umfasst vorzugsweise zumindest einen Motor, insbesondere einen Elektromotor. Die Antriebseinheit kann zusätzlich insbesondere zumindest ein Getriebe aufweisen. Vorzugsweise ist die Antriebseinheit dazu vorgesehen, die Werkzeugaufnahme, insbesondere ein von der Werkzeugaufnahme aufgenommenes Bearbeitungswerkzeug, zu einer, insbesondere rotatorischen Bewegung, anzutreiben. Insbesondere ist die Antriebseinheit, insbesondere der Elektromotor der Antriebseinheit, mit elektrischer Energie betreibbar. Die Energiespeichereinheiten, insbesondere die Akkupacks, sind bevorzugt zu einer Versorgung der Antriebseinheit mit elektrischer Energie vorgesehen. Die Energiespeichereinheiten sind vorzugsweise zumindest im Wesentlichen analog zueinander ausgebildet, insbesondere hinsichtlich einer maximalen Energiespeicherkapazität und einer maximal bereitstellbaren elektrischen Spannung. Vorzugsweise sind die Energiespeichereinheiten elektrisch in Reihe schaltbar ausgebildet, insbesondere zu einer Realisierung einer im Vergleich zu einer einzelnen Energiespeichereinheit vielfachen, insbesondere doppelten, bereitstellbaren elektrischen Spannung. Vorzugsweise ist der Elektromotor der Antriebseinheit mit einer zumindest doppelten elektrischen Spannung einer einzelnen Energiespeichereinheit betreibbar.

Die Kopplungseinheiten sind vorzugsweise zu einer mechanischen und elektrischen Kopplung mit den Energiespeichereinheiten vorgesehen. Insbesondere ist jeweils eine der Kopplungseinheiten zu einer mechanischen und elektrischen Kopplung mit jeweils einer der Energiespeichereinheiten vorgesehen. Insbesondere weisen die Kopplungseinheiten jeweils zumindest ein Kontaktelement zu einer elektrischen Verbindung mit den Energiespeichereinheiten und zumindest ein Fixierelement zu einer mechanischen Verbindung mit den Energiespeichereinheiten auf. Vorzugsweise sind die Kopplungseinheiten entlang der Längsachse des Schwenkarms betrachtet zwischen dem Schwenkpunkt und der Werkzeugaufnahme an dem Schwenkarm befestigt. Die Längsachse des Schwenkarms verläuft vorzugsweise zumindest im Wesentlichen senkrecht zu der Schwenkachse des Schwenkarms und insbesondere in der Bearbeitungsebene, insbesondere der Schneidebene. Vorzugsweise sind die Kopplungseinheiten zu einer Energieversorgung der Antriebseinheit elektrisch leitend, insbesondere über elektrische Leitungselemente, wie beispielsweise Kabel oder Drähte, mit der Antriebseinheit, insbesondere mit dem Elektromotor der Antriebseinheit, verbunden.

Die Kopplungseinheiten sind vorzugsweise zu einer kraft- und/oder formschlüssigen Kopplung der Energiespeichereinheiten vorgesehen. Eine "Kopplungsfläche" einer Kopplungseinheit ist insbesondere eine Fläche der Kopplungseinheit mit einem maximalen Flächeninhalt aller mit der Energiespeichereinheit in Kontakt stehender Flächen der Kopplungseinheit, an der eine Energiespeichereinheit in einem mit der Kopplungseinheit gekoppelten Zustand anliegt. Vorzugsweise sind die Kopplungsflächen der Kopplungseinheiten zumindest im Wesentlichen parallel zu den Haupterstreckungsebenen der Kopplungseinheiten angeordnet. Unter einer "Haupterstreckungsebene" eines Objekts soll insbesondere eine Ebene verstanden werden, welche parallel zu einer größten Seitenfläche eines kleinsten gedachten Quaders ist, welcher das Objekt gerade noch vollständig umschließt, und insbesondere durch den Mittelpunkt des Quaders verläuft. Insbesondere erstrecken sich die Fixierelemente der Kopplungseinheiten und die Kontaktelemente, insbesondere Kontaktflächen der Kontaktelemente, der Kopplungseinheiten zumindest im Wesentlichen senkrecht zu den Kopplungsflächen. Vorzugsweise sind die Kopplungseinheiten derart an dem Schwenkarm angeordnet, dass die Kopplungsflächen der Kopplungseinheiten sich in einer gemeinsamen Ebene erstrecken. Insbesondere sind die Kopplungseinheiten entlang der Längsachse des Schwenkarms betrachtet beabstandet zueinander an dem Schwenkarm befestigt. Alternativ ist denkbar, dass die Kopplungseinheiten entlang der Längsachse des Schwenkarms betrachtet miteinander in Kontakt stehend an dem Schwenkarm befestigt sind.

Durch die erfindungsgemäße Ausgestaltung der Werkzeugmaschine kann vorteilhaft eine platzsparende Anordnung von Energiespeichereinheiten an einer Werkzeugmaschine erreicht werden. Vorteilhaft kann eine akkubetriebene Werkzeugmaschine zumindest im Wesentlichen frei von Benutzungseinschränkungen, insbesondere hinsichtlich einer Handhabungssicherheit und hinsichtlich eines Nutzerkomforts, bereitgestellt werden.

Des Weiteren wird vorgeschlagen, dass die Werkzeugmaschine zumindest eine an dem Schwenkarm angeordnete Werkzeugaufnahme, insbesondere die vorgenannte Werkzeugaufnahme, zu einer Aufnahme eines Bearbeitungswerkzeugs, insbesondere eines Sägeblatts, umfasst, wobei die Werkzeugaufnahme eine zumindest im Wesentlichen senkrecht zu einer sich zumindest im Wesentlichen parallel zu den Kopplungsflächen, insbesondere zu den Haupterstreckungsebenen, der Kopplungseinheiten erstreckenden Werkzeugebene verlaufende Rotationsachse aufweist. Vorzugsweise ist die Werkzeugaufnahme, insbesondere ein an der Werkzeugaufnahme aufgenommenes Bearbeitungswerkzeug, von der Antriebseinheit zu einer Rotationsbewegung um die Rotationsachse der Werkzeugaufnahme antreibbar. Vorzugsweise entspricht die Werkzeugebene eines Bearbeitungswerkzeugs, insbesondere eines Sägeblatts, zumindest im Wesentlichen einer Haupterstreckungsebene des Bearbeitungswerkzeugs, insbesondere des Sägeblatts. Vorzugsweise erstreckt sich die Werkzeugebene eines an der Werkzeugaufnahme angeordneten Bearbeitungswerkzeugs zumindest im Wesentlichen parallel zu der Bearbeitungsebene, insbesondere der Schneidebene, des Schwenkarms. Bevorzugt verläuft die Rotationsachse der Werkzeugaufnahme in einem Neigungszustand des Schwenkarms, in dem die Bearbeitungsebene des Schwenkarms zumindest im Wesentlichen senkrecht zu der Werkstückauflagefläche ausgerichtet ist, zumindest im Wesentlichen parallel zu der Schwenkachse des Schwenkarms. Vorzugsweise verläuft die Rotationsachse der Werkzeugaufnahme zumindest im Wesentlichen parallel zu einer Rotationsachse der Antriebseinheit, insbesondere des Elektromotors der Antriebseinheit. Insbesondere sind die Rotationsachse der Werkzeugaufnahme und die Rotationsachse der Antriebseinheit, insbesondere des Elektromotors der Antriebseinheit, in einer Richtung zumindest im Wesentlichen senkrecht zu den Rotationsachsen betrachtet versetzt zueinander angeordnet. Vorzugsweise ist die Antriebseinheit, insbesondere der Elektromotor der Antriebseinheit, zu einem indirekten Antrieb der Werkzeugaufnahme vorgesehen. Alternativ ist denkbar, dass die Rotationsachse der Werkzeugaufnahme koaxial zu der Rotationsachse der Antriebseinheit, insbesondere des Elektromotors der Antriebseinheit, verläuft, insbesondere, dass die Antriebseinheit, insbesondere der Elektromotor der Antriebseinheit, zu einem direkten Antrieb der Werkzeugaufnahme vorgesehen ist. Vorteilhaft kann eine symmetrische, insbesondere hinsichtlich einer Gewichtsverteilung vorteilhafte, Anordnung der Energiespeichereinheiten an dem Schwenkarm erreicht werden.

Erfindungsgemäß wird vorgeschlagen, dass die Werkzeugmaschine zumindest eine Werkstückauflagefläche, insbesondere die vorgenannte Werkstückauflagefläche, zu einer Aufnahme zumindest eines Werkstücks umfasst, wobei die Energiespeichereinheiten in einer von der Werkstückauflagefläche zu dem Schwenkarm zeigenden Richtung mit den Kopplungseinheiten koppelbar, insbesondere in die Kopplungseinheiten einschiebbar, sind. Insbesondere weisen die Kopplungseinheiten jeweils zumindest eine der Werkstückauflagefläche zugewandte, insbesondere in zumindest einem Neigungszustand und Schwenkzustand des Schwenkarms zumindest im Wesentlichen parallel zu der Werkstückauflagefläche ausgerichtete, Anlagefläche auf, an der eine Energiespeichereinheit in einem mit der Kopplungseinheit gekoppelten Zustand anliegt. Vorzugsweise erstrecken sich die Anlageflächen zumindest im Wesentlichen senkrecht zu den Kopplungsflächen. Vorzugsweise weisen die Energiespeichereinheiten Rastelemente, insbesondere Rastnuten, auf, die derart ausgebildet sind, dass die Rastelemente in Folge einer Einschubbewegung der Energiespeichereinheiten entlang einer von der Werkstückauflagefläche zu dem Schwenkarm zeigenden Richtung mit den Kopplungseinheiten, insbesondere mit den Fixierelementen der Kopplungseinheiten, verrasten. Insbesondere sind die Kopplungseinheiten, insbesondere die Fixierelemente der Kopplungseinheiten, dazu vorgesehen, die Energiespeichereinheiten in einem mit den Kopplungseinheiten gekoppelten Zustand gegen ein Herausfallen aus den Kopplungseinheiten in Richtung der Werkstückauflagefläche zu sichern. Vorteilhaft kann eine komfortabel bedienbare Werkzeugmaschine bereitgestellt werden.

Weiterhin wird vorgeschlagen, dass die Energiespeichereinheiten in einem mit den Kopplungseinheiten gekoppelten Zustand zumindest im Wesentlichen vollständig innerhalb eines durch eine Maximalerstreckung der Antriebseinheit definierten Bereichs, insbesondere in einer Ebene quer zu der Werkstückauflagefläche, angeordnet sind. Vorzugsweise erstreckt sich die Ebene quer zu der Werkstückauflagefläche zumindest im Wesentlichen parallel zu der Werkzeugebene und zu der Bearbeitungsebene, insbesondere zu der Schneidebene. Insbesondere weist die Antriebseinheit in der Ebene quer zu der Werkstückauflagefläche, insbesondere zumindest im Wesentlichen senkrecht zu der Längsachse des Schwenkarms und quer zu der Schwenkachse des Schwenkarms, betrachtet eine Maximalerstreckung auf, die zumindest einer Maximalerstreckung der Energiespeichereinheiten in einem mit den Kopplungseinheiten gekoppelten Zustand in der Ebene quer zu der Werkstückauflagefläche, insbesondere zumindest im Wesentlichen senkrecht zu der Längsachse des Schwenkarms und quer zu der Schwenkachse des Schwenkarms, betrachtet entspricht. Insbesondere ist der durch die Maximalerstreckung der Antriebseinheit definierte Bereich innerhalb zweier gedachter sich zumindest im Wesentlichen parallel zueinander und zu der Längsachse des Schwenkarms erstreckender Ebenen, die sich zumindest im Wesentlichen senkrecht zu der Maximalerstreckung der Antriebseinheit in der Ebene quer zu der Werkstückauflagefläche erstrecken, angeordnet. Vorteilhaft kann eine kompakte Anordnung der Energiespeichereinheiten an dem Schwenkarm erreicht werden, was eine vorteilhaft einfache Handhabbarkeit der Werkzeugmaschine ermöglicht.

Zudem wird vorgeschlagen, dass die Kopplungseinheiten jeweils zumindest ein Fixierelement, insbesondere das vorgenannte Fixierelement, zu einer mechanischen Verbindung mit den Energiespeichereinheiten aufweisen, das sich zumindest im Wesentlichen senkrecht zu der Längsachse des Schwenkarms und zumindest im Wesentlichen parallel zu zumindest einer Schwenkachse des Schwenkarms erstreckt. Insbesondere erstreckt sich zumindest eine Längsachse des Fixierelements zumindest im Wesentlichen senkrecht zu der Längsachse des Schwenkarms und zumindest im Wesentlichen parallel zu der Schwenkachse des Schwenkarms, insbesondere zumindest im Wesentlichen senkrecht zu den Kopplungsflächen der Kopplungseinheiten und zumindest im Wesentlichen parallel zu den Anlageflächen der Kopplungseinheiten. Vorzugsweise sind die Fixierelemente an den Kopplungsflächen befestigt, insbesondere einteilig mit den Kopplungsflächen ausgebildet. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Vorzugsweise sind die Fixierelemente als Rastelemente, als Schnappelemente, als Bajonettelemente oder als andere, einem Fachmann als sinnvoll erscheinende Fixierelemente ausgebildet. Insbesondere weisen die Kopplungseinheiten jeweils zumindest ein Fixierelement, bevorzugt zumindest zwei Fixierelemente und besonders bevorzugt zumindest drei Fixierelemente auf. Vorteilhaft kann eine platzsparende Anordnung der Energiespeichereinheiten an dem Schwenkarm bei einer gleichzeitig sicheren Befestigung ermöglicht werden.

Des Weiteren wird vorgeschlagen, dass die Kopplungseinheiten jeweils zumindest ein Kontaktelement, insbesondere das vorgenannte Kontaktelement, zu einer elektrischen Verbindung mit den Energiespeichereinheiten umfassen, das eine Haupterstreckungsebene aufweist, die sich zumindest im Wesentlichen senkrecht zu der Längsachse des Schwenkarms und zumindest im Wesentlichen parallel zu zumindest einer Schwenkachse des Schwenkarms erstreckt. Insbesondere erstrecken sich die Haupterstreckungsebenen der Kontaktelemente zumindest im Wesentlichen senkrecht zu den Kopplungsflächen und zu den Anlageflächen der Kopplungseinheiten. Vorzugsweise sind die Kontaktelemente an den Kopplungsflächen und/oder an den Anlageflächen befestigt. Insbesondere weisen die Kopplungseinheiten jeweils zumindest ein Kontaktelement, bevorzugt zumindest zwei Kontaktelemente, besonders bevorzugt zumindest drei Kontaktelemente und besonders bevorzugt zumindest vier Kontaktelemente auf. Vorteilhaft kann eine platzsparende Anordnung der Energiespeichereinheiten an dem Schwenkarm bei einer gleichzeitig stabilen elektrischen Verbindung ermöglicht werden.

Ferner wird vorgeschlagen, dass die Kopplungseinheiten, insbesondere die mit den Kopplungseinheiten gekoppelten Energiespeichereinheiten, entlang der Längsachse des Schwenkarms betrachtet zwischen der Antriebseinheit und einem Schwenkpunkt des Schwenkarms angeordnet sind. Insbesondere sind die Kopplungseinheiten, insbesondere die mit den Kopplungseinheiten gekoppelten Energiespeichereinheiten, entlang der Längsachse des Schwenkarms betrachtet zwischen der Werkzeugaufnahme und dem Schwenkpunkt des Schwenkarms angeordnet. Vorzugsweise erstreckt sich der durch die Maximalerstreckung der Antriebseinheit, insbesondere in der Ebene quer zu der Werkstückauflagefläche, definierte Bereich entlang des Schwenkarms betrachtet zumindest im Wesentlichen von der Antriebseinheit zu dem Schwenkpunkt des Schwenkarms. Es kann eine vorteilhafte Gewichtsverteilung entlang des Schwenkarms erreicht werden, was insbesondere eine vorteilhafte Handhabbarkeit der Werkzeugmaschine ermöglicht.

Weiterhin wird vorgeschlagen, dass Seitenflächen der Energiespeichereinheiten in einem mit den Kopplungseinheiten gekoppelten Zustand sich einander entlang einer zumindest im Wesentlichen parallel zu der Längsachse des Schwenkarms verlaufenden Richtung betrachtet zugewandt sind. Eine "Seitenfläche" einer Energiespeichereinheit ist insbesondere als eine Außenfläche der Energiespeichereinheit ausgebildet, die in einem mit einer Kopplungseinheit gekoppelten Zustand der Energiespeichereinheit kontaktfrei mit der Kopplungsfläche und mit der Anlagefläche der Kopplungseinheit angeordnet ist und sich zumindest im Wesentlichen senkrecht zu der Kopplungsfläche und zu der Anlagefläche der Kopplungseinheit erstreckt. Vorzugsweise erstrecken sich die Seitenflächen der Energiespeichereinheiten in einem mit den Kopplungseinheiten gekoppelten Zustand der Energiespeichereinheiten zumindest im Wesentlichen senkrecht zu der Längsachse des Schwenkarms und zumindest im Wesentlichen parallel zu der Schwenkachse des Schwenkarms. Vorzugsweise sind die einander zugewandten Seitenflächen zweier Energiespeichereinheiten höchstens abschnittsweise von Seitenführungen der Kopplungseinheiten voneinander abgeschirmt. Vorteilhaft kann eine kompakte Anordnung der Energiespeichereinheiten in einer Richtung parallel zu der Schwenkachse des Schwenkarms erreicht werden.

Zudem wird vorgeschlagen, dass die Energiespeichereinheiten in einem mit den Kopplungseinheiten gekoppelten Zustand zumindest im Wesentlichen senkrecht zu der Längsachse des Schwenkarms zumindest abschnittsweise in Richtung zumindest einer Werkstückauflagefläche, insbesondere der vorgenannten Werkstückauflagefläche, versetzt zu einer Rotationsache der Antriebseinheit angeordnet sind. Insbesondere sind die Energiespeichereinheiten in einem mit den Kopplungseinheiten gekoppelten Zustand zumindest im Wesentlichen senkrecht zu der Längsachse des Schwenkarms zumindest abschnittsweise in Richtung der Werkstückauflagefläche versetzt zu der Rotationsachse des Elektromotors der Antriebseinheit angeordnet. Vorzugsweise sind zumindest geometrische Mittelpunkte, insbesondere Massenmittelpunkte, der Energiespeichereinheiten in einem mit den Kopplungseinheiten gekoppelten Zustand zumindest im Wesentlichen senkrecht zu der Längsachse des Schwenkarms zumindest abschnittsweise in Richtung der Werkstückauflagefläche versetzt zu der Rotationsachse der Antriebseinheit, insbesondere des Elektromotors der Antriebseinheit, angeordnet. Es kann eine vorteilhafte Massenverteilung an dem Schwenkarm erreicht werden, was insbesondere eine vorteilhafte Handhabbarkeit der Werkzeugmaschine ermöglicht.

Des Weiteren wird vorgeschlagen, dass die Energiespeichereinheiten als 18-Volt-Akkupacks ausgebildet sind. Insbesondere sind die Energiespeichereinheiten dazu vorgesehen, eine elektrische Spannung von 18 V bereitzustellen. Bevorzugt ist der Elektromotor der Antriebseinheit als ein 36-Volt-Elektromotor ausgebildet. Insbesondere ist der Elektromotor mit einer elektrischen Spannung von 36 V betreibbar. Insbesondere ist der Elektromotor mit der addierten elektrischen Spannung zweier Energiespeichereinheiten betreibbar. Vorzugsweise sind die Kopplungseinheiten derart elektrisch in Reihe geschaltet, dass die Kopplungseinheiten dem Elektromotor der Antriebseinheit die doppelte elektrische Spannung einer einzelnen jeweils mit einer der Kopplungseinheiten gekoppelten Energiespeichereinheit bereitstellen können. Vorzugsweise sind die Energiespeichereinheiten als Lithium-lonen-Akkupacks, als Lithium-Polymer-Akkupacks, als Nickel-Cadmium-Akkupacks oder als andere, einem Fachmann als sinnvoll erscheinende Akkupacks ausgebildet. Vorteilhaft kann eine leistungsstarke Antriebseinheit mittels zweier weniger leistungsstarker Energiespeichereinheiten betrieben werden, die platzsparend an dem Schwenkarm anordenbar sind.

Die erfindungsgemäße Werkzeugmaschine soll hierbei nicht auf die oben beschriebene Anwendung und Ausführungsform beschränkt sein. Insbesondere kann die erfindungsgemäße Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Werkzeugmaschine in einer perspektivischen Darstellung,
- Fig. 2: die erfindungsgemäße Werkzeugmaschine aus Fig. 1 in einer schematischen Darstellung,
- Fig. 3: einen Schwenkarm der erfindungsgemäßen Werkzeugmaschine aus Fig. 1 in einer perspektivischen Darstellung und
- Fig. 4: Kopplungseinheiten der erfindungsgemäßen Werkzeugmaschine aus Fig. 1 in einer perspektivischen Darstellung.

### Beschreibung des Ausführungsbeispiels

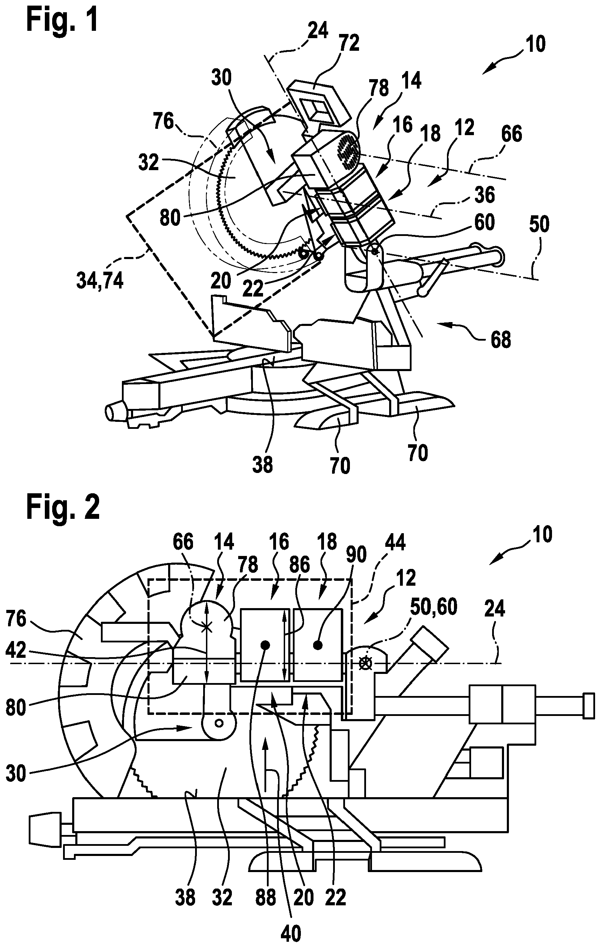

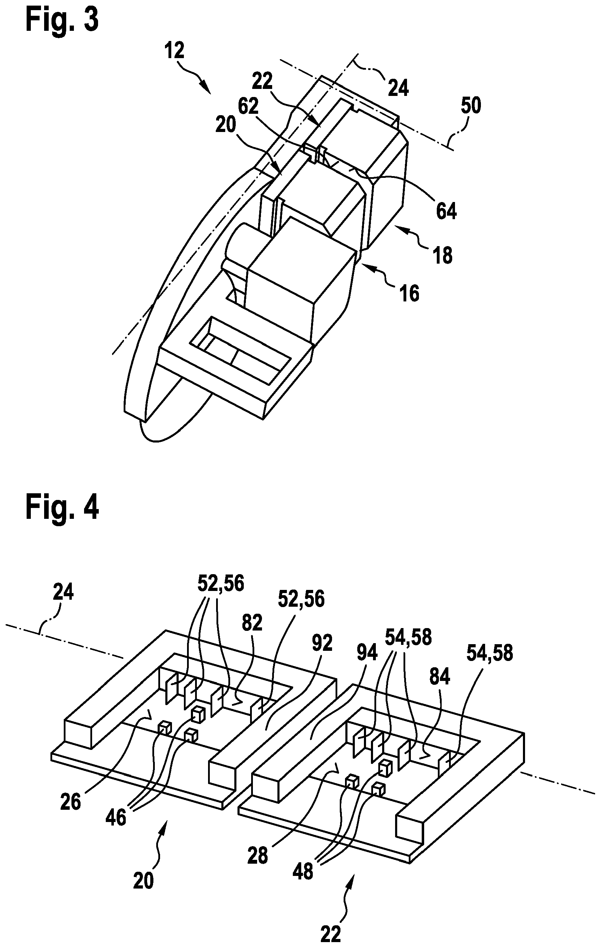

Figur 1 zeigt eine Werkzeugmaschine 10 in einer perspektivischen Darstellung. Bevorzugt ist die Werkzeugmaschine 10 als eine stationäre Werkzeugmaschine, insbesondere verschieden von einer Handwerkzeugmaschine, ausgebildet. Vorzugsweise ist die Werkzeugmaschine 10 als eine Säge, insbesondere als eine Kapp- und/oder Gehrungssäge, ausgebildet. Im vorliegenden Ausführungsbeispiel ist die Werkzeugmaschine 10 beispielhaft als eine Kapp- und/oder Gehrungssäge ausgebildet. Alternativ ist denkbar, dass die Werkzeugmaschine 10 als eine Schleifmaschine, als eine Hobelmaschine, als eine Standbohrmaschine, als eine Fräsmaschine oder als eine andere, einem Fachmann als sinnvoll erscheinende Werkzeugmaschine ausgebildet ist. Vorzugsweise umfasst die Werkzeugmaschine 10, insbesondere die Kapp- und/oder Gehrungssäge, zumindest einen Schwenkarm 12, zumindest eine an dem Schwenkarm 12 angeordnete Antriebseinheit 14, zumindest zwei elektrisch reihenschaltbare Energiespeichereinheiten 16, 18, insbesondere Akkupacks, zu einer Energieversorgung der Antriebseinheit 14 und zumindest zwei Kopplungseinheiten 20, 22 zu einer Befestigung der Energiespeichereinheiten 16, 18 an dem Schwenkarm 12. Im vorliegenden Ausführungsbeispiel umfasst die Werkzeugmaschine 10 beispielhaft eine Kopplungseinheit 20, die zu einer Kopplung mit einer Energiespeichereinheit 16 vorgesehen ist, und eine weitere Kopplungseinheit 22, die zu einer Kopplung mit einer weiteren Energiespeichereinheit 18 vorgesehen ist. Bevorzugt sind die Kopplungseinheiten 20, 22 entlang einer Längsachse 24 des Schwenkarms 12 betrachtet versetzt zueinander an dem Schwenkarm 12 angeordnet, wobei die Längsachse 24 des Schwenkarms 12 zumindest im Wesentlichen parallel zu Kopplungsflächen 26, 28, insbesondere Haupterstreckungsebenen, der Kopplungseinheiten 20, 22 verläuft (vgl. Figur 4).

Der Schwenkarm 12 ist vorzugsweise zu einer beweglichen Lagerung der Antriebseinheit 14 der Werkzeugmaschine 10 und/oder zumindest einer Werkzeugaufnahme 30 der Werkzeugmaschine 10, die zu einer Aufnahme eines Bearbeitungswerkzeugs 32, beispielsweise eines Sägeblatts, eines Fräskopfs, eines Bohrers o. dgl., vorgesehen ist, vorgesehen, insbesondere relativ zu zumindest einer Werkstückauflagefläche 38 der Werkzeugmaschine 10. Im vorliegenden Ausführungsbeispiel ist das Bearbeitungswerkzeug 32 beispielhaft als ein Sägeblatt ausgebildet. Insbesondere ist der Schwenkarm 12 um einen Schwenkpunkt 60, insbesondere um eine durch den Schwenkpunkt 60 verlaufende Schwenkachse 50, schwenkbar gelagert, insbesondere an einer Grundeinheit 68 der Werkzeugmaschine 10. Insbesondere ist die Werkzeugaufnahme 30 an einem dem Schwenkpunkt 60 abgewandten Ende des Schwenkarms 12 angeordnet. Bevorzugt ist die Grundeinheit 68 zu einer Anordnung auf einem Untergrund, beispielsweise einem Fußboden, einem Tisch o. dgl., vorgesehen (hier nicht weiter dargestellt). Insbesondere kann die Grundeinheit 68 zumindest einen Standfuß 70, bevorzugt eine Mehrzahl von Standfüßen 70, zu einer Anordnung auf dem Untergrund aufweisen. Vorzugsweise bildet die Grundeinheit 68 zumindest abschnittsweise die Werkstückauflagefläche 38 der Werkzeugmaschine 10 aus. Insbesondere ist auf der Werkstückauflagefläche 38 zumindest ein mittels der Werkzeugmaschine 10, insbesondere mittels des Bearbeitungswerkzeugs 32, zu bearbeitendes Werkstück platzierbar. Insbesondere ist der Schwenkarm 12, insbesondere das an dem Schwenkarm 12 mittels der Werkzeugaufnahme 30 angeordnete Bearbeitungswerkzeug 32, durch einen Schwenkvorgang des Schwenkarms 12 um die Schwenkachse 50 in Richtung der Werkstückauflagefläche 38 bewegbar, insbesondere mit einem auf der Werkstückauflagefläche 38 angeordneten Werkstück in Kontakt bringbar. Insbesondere ist an dem Schwenkarm 12 ein Handgriff 72 der Werkzeugmaschine 10 zu einer Betätigung des Schwenkarms 12 befestigt. Vorzugsweise ist eine Bearbeitungsebene 74, insbesondere eine Schneidebene, des Schwenkarms 12 einstellbar. Insbesondere ist der Schwenkarm 12 zu einer Einstellung der Bearbeitungsebene 74, insbesondere der Schneidebene, des Schwenkarms 12 quer zu der Schwenkachse 50 des Schwenkarms 12 und quer zu der Werkstückauflagefläche 38 neigbar gelagert, insbesondere an der Grundeinheit 68 der Werkzeugmaschine 10. Insbesondere ist der Schwenkarm 12 um eine zumindest im Wesentlichen parallel zu der Werkstückauflagefläche 38 und quer, insbesondere zumindest im Wesentlichen senkrecht, zu der Schwenkachse 50 des Schwenkarms 12 verlaufende Neigungsachse neigbar gelagert, insbesondere an der Grundeinheit 68 der Werkzeugmaschine 10. Insbesondere umfasst die Werkzeugmaschine 10 eine beweglich an dem Schwenkarm 12 gelagerte Schutzhaube 76 zu einem Schutz eines Bedieners der Werkzeugmaschine 10 vor dem Bearbeitungswerkzeug 32.

Die Antriebseinheit 14 umfasst vorzugsweise zumindest einen Motor, insbesondere einen Elektromotor 78. Die Antriebseinheit 14 kann zusätzlich insbesondere zumindest ein Getriebe 80 aufweisen. Vorzugsweise ist die Antriebseinheit 14 dazu vorgesehen, die Werkzeugaufnahme 30, insbesondere ein von der Werkzeugaufnahme 30 aufgenommenes Bearbeitungswerkzeug 32, zu einer, insbesondere rotatorischen Bewegung, anzutreiben. Insbesondere ist die Antriebseinheit 14, insbesondere der Elektromotor 78 der Antriebseinheit 14, mit elektrischer Energie betreibbar. Die Energiespeichereinheiten 16, 18, insbesondere die Ackupacks, sind bevorzugt zu einer Versorgung der Antriebseinheit 14 mit elektrischer Energie vorgesehen. Die Energiespeichereinheiten 16, 18 sind vorzugsweise zumindest im Wesentlichen analog zueinander ausgebildet, insbesondere hinsichtlich einer maximalen Energiespeicherkapazität und einer maximal bereitstellbaren elektrischen Spannung. Vorzugsweise sind die Energiespeichereinheiten 16, 18 elektrisch in Reihe schaltbar ausgebildet, insbesondere zu einer Realisierung einer im Vergleich zu einer einzelnen Energiespeichereinheit 16, 18 vielfachen, insbesondere doppelten, bereitstellbaren elektrischen Spannung. Vorzugsweise ist der Elektromotor 78 der Antriebseinheit 14 mit einer zumindest doppelten elektrischen Spannung einer einzelnen Energiespeichereinheit 16, 18 betreibbar.

Die Kopplungseinheiten 20, 22 sind vorzugsweise zu einer mechanischen und elektrischen Kopplung mit den Energiespeichereinheiten 16, 18 vorgesehen. Insbesondere ist jeweils eine der Kopplungseinheiten 20, 22 zu einer mechanischen und elektrischen Kopplung mit jeweils einer der Energiespeichereinheiten 16, 18 vorgesehen. Insbesondere weisen die Kopplungseinheiten 20, 22 jeweils zumindest ein Kontaktelement 52, 54 zu einer elektrischen Verbindung mit den Energiespeichereinheiten 16, 18 und zumindest ein Fixierelement 46, 48 zu einer mechanischen Verbindung mit den Energiespeichereinheiten 16, 18 auf (vgl. Figur 4). Vorzugsweise sind die Kopplungseinheiten 20, 22 entlang der Längsachse 24 des Schwenkarms 12 betrachtet zwischen dem Schwenkpunkt 60 und der Werkzeugaufnahme 30 an dem Schwenkarm 12 befestigt. Die Längsachse 24 des Schwenkarms 12 verläuft vorzugsweise zumindest im Wesentlichen senkrecht zu der Schwenkachse 50 des Schwenkarms 12 und insbesondere in der Bearbeitungsebene 74, insbesondere der Schneidebene. Vorzugsweise sind die Kopplungseinheiten 20, 22 zu einer Energieversorgung der Antriebseinheit 14 elektrisch leitend, insbesondere über elektrische Leitungselemente, wie beispielsweise Kabel oder Drähte, mit der Antriebseinheit 14, insbesondere mit dem Elektromotor 78 der Antriebseinheit 14, verbunden.

Bevorzugt sind die Energiespeichereinheiten 16, 18 als 18-Volt-Akkupacks ausgebildet. Insbesondere sind die Energiespeichereinheiten 16, 18 dazu vorgesehen, eine elektrische Spannung von 18 V bereitzustellen. Bevorzugt ist der Elektromotor 78 der Antriebseinheit 14 als ein 36-Volt-Elektromotor ausgebildet. Insbesondere ist der Elektromotor 78 mit einer elektrischen Spannung von 36 V betreibbar. Insbesondere ist der Elektromotor 78 mit der addierten elektrischen Spannung der zwei Energiespeichereinheiten 16, 18 betreibbar. Vorzugsweise sind die Kopplungseinheiten 20, 22 derart elektrisch in Reihe geschaltet, dass die Kopplungseinheiten 20, 22 dem Elektromotor 78 der Antriebseinheit 14 die doppelte elektrische Spannung einer einzelnen jeweils mit einer der Kopplungseinheiten 20, 22 gekoppelten Energiespeichereinheit 16, 18 bereitstellen können. Vorzugsweise sind die Energiespeichereinheiten 16, 18 als Lithium-Ionen-Akkupacks, als Lithium-Polymer-Akkupacks, als Nickel-Cadmium-Akkupacks oder als andere, einem Fachmann als sinnvoll erscheinende Akkupacks ausgebildet.

Die Kopplungseinheiten 20, 22 sind vorzugsweise zu einer kraft- und/oder formschlüssigen Kopplung der Energiespeichereinheiten 16, 18 vorgesehen. Vorzugsweise sind die Kopplungsflächen 26, 28 der Kopplungseinheiten 20, 22 zumindest im Wesentlichen parallel zu den Haupterstreckungsebenen der Kopplungseinheiten 20, 22 angeordnet. Insbesondere erstrecken sich die Fixierelemente 46, 48 der Kopplungseinheiten 20, 22 und die Kontaktelemente 52, 54, insbesondere Kontaktflächen der Kontaktelemente 52, 54, der Kopplungseinheiten 20, 22 zumindest im Wesentlichen senkrecht zu den Kopplungsflächen 26, 28 (vgl. Figur 4). Vorzugsweise sind die Kopplungseinheiten 20, 22 derart an dem Schwenkarm 12 angeordnet, dass die Kopplungsflächen 26, 28 der Kopplungseinheiten 20, 22 sich in einer gemeinsamen Ebene erstrecken. Insbesondere sind die Kopplungseinheiten 20, 22 entlang der Längsachse 24 des Schwenkarms 12 betrachtet beabstandet zueinander an dem Schwenkarm 12 befestigt. Alternativ ist denkbar, dass die Kopplungseinheiten 20, 22 entlang der Längsachse 24 des Schwenkarms 12 betrachtet miteinander in Kontakt stehend an dem Schwenkarm 12 befestigt sind.

Bevorzugt umfasst die Werkzeugmaschine 10 zumindest eine an dem Schwenkarm 12 angeordnete Werkzeugaufnahme, insbesondere die vorgenannte Werkzeugaufnahme 30, zu einer Aufnahme eines Bearbeitungswerkzeugs 32, insbesondere eines Sägeblatts, wobei die Werkzeugaufnahme 30 eine zumindest im Wesentlichen senkrecht zu einer sich zumindest im Wesentlichen parallel zu den Kopplungsflächen 26, 28, insbesondere zu den Haupterstreckungsebenen, der Kopplungseinheiten 20, 22 erstreckenden Werkzeugebene 34 verlaufende Rotationsachse 36 aufweist. Vorzugsweise ist die Werkzeugaufnahme 30, insbesondere ein an der Werkzeugaufnahme 30 aufgenommenes Bearbeitungswerkzeug 32, von der Antriebseinheit 14 zu einer Rotationsbewegung um die Rotationsachse 36 der Werkzeugaufnahme 30 antreibbar. Vorzugsweise entspricht die Werkzeugebene 34 des Bearbeitungswerkzeugs, insbesondere des Sägeblatts, zumindest im Wesentlichen einer Haupterstreckungsebene des Bearbeitungswerkzeugs 32, insbesondere des Sägeblatts. Vorzugsweise erstreckt sich die Werkzeugebene 34 des an der Werkzeugaufnahme 30 angeordneten Bearbeitungswerkzeugs 32 zumindest im Wesentlichen parallel zu der Bearbeitungsebene 74, insbesondere der Schneidebene, des Schwenkarms 12. Bevorzugt verläuft die Rotationsachse 36 der Werkzeugaufnahme 30 in einem Neigungszustand des Schwenkarms 12, in dem die Bearbeitungsebene 74 des Schwenkarms 12 zumindest im Wesentlichen senkrecht zu der Werkstückauflagefläche 38 ausgerichtet ist, zumindest im Wesentlichen parallel zu der Schwenkachse 50 des Schwenkarms 12. Vorzugsweise verläuft die Rotationsachse 36 der Werkzeugaufnahme 30 zumindest im Wesentlichen parallel zu einer Rotationsachse 66 der Antriebseinheit 14, insbesondere des Elektromotors 78 der Antriebseinheit 14. Insbesondere sind die Rotationsachse 36 der Werkzeugaufnahme 30 und die Rotationsachse 66 der Antriebseinheit 14, insbesondere des Elektromotors 78 der Antriebseinheit 14, in einer Richtung zumindest im Wesentlichen senkrecht zu den Rotationsachsen 36, 66 betrachtet versetzt zueinander angeordnet. Vorzugsweise ist die Antriebseinheit 14, insbesondere der Elektromotor 78 der Antriebseinheit 14, zu einem indirekten Antrieb der Werkzeugaufnahme 30 vorgesehen. Alternativ ist denkbar, dass die Rotationsachse 36 der Werkzeugaufnahme 30 koaxial zu der Rotationsachse 66 der Antriebseinheit 14, insbesondere des Elektromotors 78 der Antriebseinheit 14, verläuft, insbesondere, dass die Antriebseinheit 14, insbesondere der Elektromotor 78 der Antriebseinheit 14, zu einem direkten Antrieb der Werkzeugaufnahme 30 vorgesehen ist.

Figur 2 zeigt die Werkzeugmaschine 10 aus Fig. 1 in einer schematischen Darstellung. In Figur 2 ist die Werkzeugmaschine 10 in einem Schwenkzustand des Schwenkarms 12 dargestellt, in dem das Bearbeitungswerkzeug 32 in Kontakt mit der Werkstückauflagefläche 38 steht, während in Figur 1 die Werkzeugmaschine 10 in einem Schwenkzustand des Schwenkarms 12 dargestellt ist, in dem das Bearbeitungswerkzeug 32 beabstandet von der Werkstückauflagefläche 38 ist.

Erfindungsgemäß umfasst die Werkzeugmaschine 10 zumindest eine Werkstückauflagefläche, insbesondere die vorgenannte Werkstückauflagefläche 38, zu einer Aufnahme zumindest eines Werkstücks, wobei die Energiespeichereinheiten 16, 18 in einer von der Werkstückauflagefläche 38 zu dem Schwenkarm 12 zeigenden Richtung 40 mit den Kopplungseinheiten 20, 22 koppelbar, insbesondere in die Kopplungseinheiten 20, 22 einschiebbar, sind. Insbesondere weisen die Kopplungseinheiten 20, 22 jeweils zumindest eine der Werkstückauflagefläche 38 zugewandte, insbesondere in zumindest einem Neigungszustand und Schwenkzustand des Schwenkarms 12 zumindest im Wesentlichen parallel zu der Werkstückauflagefläche 38 ausgerichtete, Anlagefläche 82, 84 auf, an der eine Energiespeichereinheit 16, 18 in einem mit der Kopplungseinheit 20, 22 gekoppelten Zustand anliegt (vgl. Figur 4). Vorzugsweise erstrecken sich die Anlageflächen 82, 84 zumindest im Wesentlichen senkrecht zu den Kopplungsflächen 26, 28. Vorzugsweise weisen die Energiespeichereinheiten 16, 18 Rastelemente, insbesondere Rastnuten, auf, die derart ausgebildet sind, dass die Rastelemente in Folge einer Einschubbewegung der Energiespeichereinheiten 16, 18 entlang einer von der Werkstückauflagefläche 38 zu dem Schwenkarm 12 zeigenden Richtung 40 mit den Kopplungseinheiten 20, 22, insbesondere mit den Fixierelementen 46, 48 der Kopplungseinheiten 20, 22, verrasten. Insbesondere sind die Kopplungseinheiten 20, 22, insbesondere die Fixierelemente 46, 48 der Kopplungseinheiten 20, 22, dazu vorgesehen, die Energiespeichereinheiten 16, 18 in einem mit den Kopplungseinheiten 20, 22 gekoppelten Zustand gegen ein Herausfallen aus den Kopplungseinheiten 20, 22 in Richtung der Werkstückauflagefläche 38 zu sichern.

Bevorzugt sind die Energiespeichereinheiten 16, 18 in einem mit den Kopplungseinheiten 20, 22 gekoppelten Zustand zumindest im Wesentlichen vollständig innerhalb eines durch eine Maximalerstreckung 42 der Antriebseinheit 14 definierten Bereichs, insbesondere in einer Ebene 44 quer zu der Werkstückauflagefläche 38, angeordnet. Vorzugsweise erstreckt sich die Ebene 44 quer zu der Werkstückauflagefläche 38 zumindest im Wesentlichen parallel zu der Werkzeugebene 34 und zu der Bearbeitungsebene 74, insbesondere zu der Schneidebene. Insbesondere weist die Antriebseinheit 14 in der Ebene 44 quer zu der Werkstückauflagefläche 38, insbesondere zumindest im Wesentlichen senkrecht zu der Längsachse 24 des Schwenkarms 12 und quer zu der Schwenkachse 50 des Schwenkarms 12, betrachtet eine Maximalerstreckung 42 auf, die zumindest einer Maximalerstreckung 86 der Energiespeichereinheiten 16, 18 in einem mit den Kopplungseinheiten 20, 22 gekoppelten Zustand in der Ebene 44 quer zu der Werkstückauflagefläche 38, insbesondere zumindest im Wesentlichen senkrecht zu der Längsachse 24 des Schwenkarms 12 und quer zu der Schwenkachse 50 des Schwenkarms 12, betrachtet entspricht. Insbesondere ist der durch die Maximalerstreckung 42 der Antriebseinheit 14 definierte Bereich innerhalb zweier gedachter sich zumindest im Wesentlichen parallel zueinander und zu der Längsachse 24 des Schwenkarms 12 erstreckender Ebenen, die sich zumindest im Wesentlichen senkrecht zu der Maximalerstreckung 42 der Antriebseinheit 14 in der Ebene 44 quer zu der Werkstückauflagefläche 38 erstrecken, angeordnet.

Bevorzugt sind die Kopplungseinheiten 20, 22, insbesondere die mit den Kopplungseinheiten 20, 22 gekoppelten Energiespeichereinheiten 16, 18, entlang der Längsachse 24 des Schwenkarms 12 betrachtet zwischen der Antriebseinheit 14 und einem Schwenkpunkt 60 des Schwenkarms 12 angeordnet. Insbesondere sind die Kopplungseinheiten 20, 22, insbesondere die mit den Kopplungseinheiten 20, 22 gekoppelten Energiespeichereinheiten 16, 18, entlang der Längsachse 24 des Schwenkarms 12 betrachtet zwischen der Werkzeugaufnahme 30 und dem Schwenkpunkt 60 des Schwenkarms 12 angeordnet. Vorzugsweise erstreckt sich der durch die Maximalerstreckung 42 der Antriebseinheit 14, insbesondere in der Ebene 44 quer zu der Werkstückauflagefläche 38, definierte Bereich entlang des Schwenkarms 12 betrachtet zumindest im Wesentlichen von der Antriebseinheit 14 zu dem Schwenkpunkt 60 des Schwenkarms 12.

Bevorzugt sind die Energiespeichereinheiten 16, 18 in einem mit den Kopplungseinheiten 20, 22 gekoppelten Zustand zumindest im Wesentlichen senkrecht zu der Längsachse 24 des Schwenkarms 12 zumindest abschnittsweise in Richtung zumindest einer Werkstückauflagefläche, insbesondere der vorgenannten Werkstückauflagefläche 38, versetzt zu einer Rotationsache 66 der Antriebseinheit 14 angeordnet. Insbesondere sind die Energiespeichereinheiten 16, 18 in einem mit den Kopplungseinheiten 20, 22 gekoppelten Zustand zumindest im Wesentlichen senkrecht zu der Längsachse 24 des Schwenkarms 12 zumindest abschnittsweise in Richtung der Werkstückauflagefläche 38 versetzt zu der Rotationsachse 66 des Elektromotors 78 der Antriebseinheit 14 angeordnet. Vorzugsweise sind zumindest geometrische Mittelpunkte 88, 90, insbesondere Massenmittelpunkte, der Energiespeichereinheiten 16, 18 in einem mit den Kopplungseinheiten 20, 22 gekoppelten Zustand zumindest im Wesentlichen senkrecht zu der Längsachse 24 des Schwenkarms 12 zumindest abschnittsweise in Richtung der Werkstückauflagefläche 38 versetzt zu der Rotationsachse 66 der Antriebseinheit 14, insbesondere des Elektromotors 78 der Antriebseinheit 14, angeordnet.

Figur 3 zeigt den Schwenkarm 12 der Werkzeugmaschine 10 aus Fig. 1 in einer perspektivischen Darstellung. Bevorzugt sind Seitenflächen 62, 64 der Energiespeichereinheiten 16, 18 in einem mit den Kopplungseinheiten 20, 22 gekoppelten Zustand sich einander entlang einer zumindest im Wesentlichen parallel zu der Längsachse 24 des Schwenkarms 12 verlaufenden Richtung betrachtet zugewandt. Eine Seitenfläche 62 der Energiespeichereinheit 16 ist insbesondere einer Seitenfläche 64 der weiteren Energiespeichereinheit 18 zugewandt. Vorzugsweise erstrecken sich die Seitenflächen 62, 64 der Energiespeichereinheiten 16, 18 in einem mit den Kopplungseinheiten 20, 22 gekoppelten Zustand der Energiespeichereinheiten 16, 18 zumindest im Wesentlichen senkrecht zu der Längsachse 24 des Schwenkarms 12 und zumindest im Wesentlichen parallel zu der Schwenkachse 50 des Schwenkarms 12. Vorzugsweise sind die einander zugewandten Seitenflächen 62, 64 der zwei Energiespeichereinheiten 16, 18 höchstens abschnittsweise von Seitenführungen 92, 94 der Kopplungseinheiten 20, 22 voneinander abgeschirmt (vgl. Figur 4).

Figur 4 zeigt die Kopplungseinheiten 20, 22 der Werkzeugmaschine 10 aus Fig. 1 in einer perspektivischen Darstellung. Bevorzugt weisen die Kopplungseinheiten 20, 22 jeweils zumindest ein Fixierelement, insbesondere das zumindest eine vorgenannte Fixierelement 46, 48, zu einer mechanischen Verbindung mit den Energiespeichereinheiten 16, 18 auf, das sich zumindest im Wesentlichen senkrecht zu der Längsachse 24 des Schwenkarms 12 und zumindest im Wesentlichen parallel zu zumindest einer Schwenkachse 50 des Schwenkarms 12 erstreckt. Insbesondere weisen die Kopplungseinheiten 20, 22 jeweils zumindest ein Fixierelement 46, 48, bevorzugt zumindest zwei Fixierelemente 46, 48 und besonders bevorzugt zumindest drei Fixierelemente 46, 48 auf. Im vorliegenden Ausführungsbeispiel weist die Kopplungseinheit 20 beispielhaft drei Fixierelemente 46 und die weitere Kopplungseinheit 22 beispielhaft drei Fixierelemente 48 auf. Insbesondere erstrecken sich Längsachsen der Fixierelemente 46, 48 zumindest im Wesentlichen senkrecht zu der Längsachse 24 des Schwenkarms 12 und zumindest im Wesentlichen parallel zu der Schwenkachse 50 des Schwenkarms 12, insbesondere zumindest im Wesentlichen senkrecht zu den Kopplungsflächen 26, 28 der Kopplungseinheiten 20, 22 und zumindest im Wesentlichen parallel zu den Anlageflächen 82, 84 der Kopplungseinheiten 20, 22. Vorzugsweise sind die Fixierelemente 46, 48 an den Kopplungsflächen 26, 28 befestigt, insbesondere einteilig mit den Kopplungsflächen 26, 28 ausgebildet. Vorzugsweise sind die Fixierelemente 46, 48 als Rastelemente, als Schnappelemente, als Bajonettelemente oder als andere, einem Fachmann als sinnvoll erscheinende Fixierelemente ausgebildet.

Bevorzugt umfassen die Kopplungseinheiten 20, 22 jeweils zumindest ein Kontaktelement, insbesondere das zumindest eine vorgenannte Kontaktelement 52, 54, zu einer elektrischen Verbindung mit den Energiespeichereinheiten 16, 18, das eine Haupterstreckungsebene 56, 58 aufweist, die sich zumindest im Wesentlichen senkrecht zu der Längsachse 24 des Schwenkarms 12 und zumindest im Wesentlichen parallel zu zumindest einer Schwenkachse 50 des Schwenkarms 12 erstreckt. Insbesondere weisen die Kopplungseinheiten 20, 22 jeweils zumindest ein Kontaktelement 52, 54, bevorzugt zumindest zwei Kontaktelemente 52, 54, besonders bevorzugt zumindest drei Kontaktelemente 52, 54 und besonders bevorzugt zumindest vier Kontaktelemente 52, 54 auf. Im vorliegenden Ausführungsbeispiel weist die Kopplungseinheit 20 beispielhaft vier Kontaktelemente 52 und die weitere Kopplungseinheit 22 beispielhaft vier Kontaktelemente 54 auf. Insbesondere erstrecken sich die Haupterstreckungsebenen 56, 58 der Kontaktelemente 52, 54 zumindest im Wesentlichen senkrecht zu den Kopplungsflächen 26, 28 und zu den Anlageflächen 82, 84 der Kopplungseinheiten 20, 22. Vorzugsweise sind die Kontaktelemente 52, 54 an den Kopplungsflächen 26, 28 und/oder an den Anlageflächen 82, 84 befestigt.

## Patentansprüche

1. Werkzeugmaschine, insbesondere Kapp- und/oder Gehrungssäge, mit zumindest einem Schwenkarm (12), mit zumindest einer an dem Schwenkarm (12) angeordneten Antriebseinheit (14), mit zumindest zwei elektrisch reihenschaltbaren Energiespeichereinheiten (16, 18), insbesondere Akkupacks, zu einer Energieversorgung der Antriebseinheit (14) und mit zumindest zwei Kopplungseinheiten (20, 22) zu einer Befestigung der Energiespeichereinheiten (16, 18) an dem Schwenkarm (12), **wobei** die Kopplungseinheiten (20, 22) entlang einer Längsachse (24) des Schwenkarms (12) betrachtet versetzt zueinander an dem Schwenkarm (12) angeordnet sind, wobei die Längsachse (24) des Schwenkarms (12) zumindest im Wesentlichen parallel zu Kopplungsflächen (26, 28), insbesondere Haupterstreckungsebenen, der Kopplungseinheiten (20, 22) verläuft, **gekennzeichnet durch** zumindest eine Werkstückauflagefläche (38) zu einer Aufnahme zumindest eines Werkstücks, wobei die Energiespeichereinheiten (16, 18) in einer von der Werkstückauflagefläche (38) zu dem Schwenkarm (12) zeigenden Richtung (40) mit den Kopplungseinheiten (20, 22) koppelbar, insbesondere in die Kopplungseinheiten (20, 22) einschiebbar, sind.

2. Werkzeugmaschine nach Anspruch 1, **gekennzeichnet durch** zumindest eine an dem Schwenkarm (12) angeordnete Werkzeugaufnahme (30) zu einer Aufnahme eines Bearbeitungswerkzeugs (32), insbesondere eines Sägeblatts, wobei die Werkzeugaufnahme (30) eine zumindest im Wesentlichen senkrecht zu einer sich zumindest im Wesentlichen parallel zu den Kopplungsflächen (26, 28), insbesondere zu den Haupterstreckungsebenen, der Kopplungseinheiten (20, 22) erstreckenden Werkzeugebene (34) verlaufende Rotationsachse (36) aufweist.

3. maschine nach Anspruch 1, **dadurch gekennzeichnet, dass** die Energiespeichereinheiten (16, 18) in einem mit den Kopplungseinheiten (20, 22) gekoppelten Zustand zumindest im Wesentlichen vollständig innerhalb eines durch eine Maximalerstreckung (42) der Antriebseinheit (14) definierten Bereichs, insbesondere in einer Ebene (44) quer zu der Werkstückauflagefläche (38), angeordnet sind.

4. Werkzeugmaschine nach einem der vorhergehenden Ansprüche, **dadurch gekennzeichnet, dass** die Kopplungseinheiten (20, 22) jeweils zumindest ein Fixierelement (46, 48) zu einer mechanischen Verbindung mit den Energiespeichereinheiten (16, 18) aufweisen, das sich zumindest im Wesentlichen senkrecht zu der Längsachse (24) des Schwenkarms (12) und zumindest im Wesentlichen parallel zu zumindest einer Schwenkachse (50) des Schwenkarms (12) erstreckt.

5. Werkzeugmaschine nach einem der vorhergehenden Ansprüche, **dadurch gekennzeichnet, dass** die Kopplungseinheiten (20, 22) jeweils zumindest ein Kontaktelement (52, 54) zu einer elektrischen Verbindung mit den Energiespeichereinheiten (16, 18) umfassen, das eine Haupterstreckungsebene (56, 58) aufweist, die sich zumindest im Wesentlichen senkrecht zu der Längsachse (24) des Schwenkarms (12) und zumindest im Wesentlichen parallel zu zumindest einer Schwenkachse (50) des Schwenkarms (12) erstreckt.

6. Werkzeugmaschine nach einem der vorhergehenden Ansprüche, **dadurch gekennzeichnet, dass** die Kopplungseinheiten (20, 22), insbesondere die mit den Kopplungseinheiten (20, 22) gekoppelten Energiespeichereinheiten (16, 18), entlang der Längsachse (24) des Schwenkarms (12) betrachtet zwischen der Antriebseinheit (14) und einem Schwenkpunkt (60) des Schwenkarms (12) angeordnet sind.

7. Werkzeugmaschine nach einem der vorhergehenden Ansprüche, **dadurch gekennzeichnet, dass** Seitenflächen (62, 64) der Energiespeichereinheiten (16, 18) in einem mit den Kopplungseinheiten (20, 22) gekoppelten Zustand sich einander entlang einer zumindest im Wesentlichen parallel zu der Längsachse (24) des Schwenkarms (12) verlaufenden Richtung betrachtet zugewandt sind.

8. Werkzeugmaschine nach einem der vorhergehenden Ansprüche, **dadurch gekennzeichnet, dass** die Energiespeichereinheiten (16, 18) in einem mit den Kopplungseinheiten (20, 22) gekoppelten Zustand zumindest im Wesentlichen senkrecht zu der Längsachse (24) des Schwenkarms (12) zumindest abschnittsweise in Richtung zumindest einer Werkstückauflagefläche (38) versetzt zu einer Rotationsache (66) der Antriebseinheit (14) angeordnet sind.

9. Werkzeugmaschine nach einem der vorhergehenden Ansprüche, **dadurch gekennzeichnet, dass** die Energiespeichereinheiten (16, 18) als 18-Volt-Akkupacks ausgebildet sind.

## Claims

1. Power tool, in particular a circular cross-cut and/or mitre saw, comprising at least one swivel arm (12), comprising at least one drive unit (14) arranged on the swivel arm (12), comprising at least two energy storage units (16, 18), in particular battery packs, that can be electrically connected in series, for supplying energy to the drive unit (14), and comprising at least two coupling units (20, 22) for fastening the energy storage units (16, 18) to the swivel arm (12), wherein the coupling units (20, 22) are arranged on the swivel arm (12), offset from one another as viewed along a longitudinal axis (24) of the swivel arm (12), wherein the longitudinal axis (24) of the swivel arm (12) is at least substantially parallel to coupling surfaces (26, 28), in particular planes of main extent, of the coupling units (20, 22), **characterized by** at least one workpiece support surface (38) for receiving at least one workpiece, wherein the energy storage units (16, 18) can be coupled to the coupling units (20, 22), in particular can be inserted into the coupling units (20, 22), in a direction (40) from the workpiece support surface (38) toward the swivel arm (12).

2. Power tool according to Claim 1, **characterized by** at least one tool receiver (30), arranged on the swivel arm (12), for receiving a working tool (32), in particular a saw blade, wherein the tool receiver (30) has an axis of rotation (36) that is at least substantially perpendicular to a tool plane (34) extending at least substantially parallel to the coupling surfaces (26, 28), in particular to the planes of main extent, of the coupling units (20, 22).

3. tool according to Claim 1, **characterized in that** the energy storage units (16, 18), when having been coupled to the coupling units (20, 22), are arranged at least substantially entirely within a region defined by a maximum extent (42) of the drive unit (14), in particular in a plane (44) transverse to the workpiece support surface (38).

4. Power tool according to any one of the preceding claims, **characterized in that** the coupling units (20, 22) each have at least one fixing element (46, 48) for mechanical connection to the energy storage units (16, 18), which extends at least substantially perpendicularly in relation to the longitudinal axis (24) of the swivel arm (12) and at least substantially parallel to at least a swivel axis (50) of the swivel arm (12).

5. Power tool according to any one of the preceding claims, **characterized in that** the coupling units (20, 22) each comprise at least one contact element (52, 54) for electrical connection to the energy storage units (16, 18), which has a plane of main extent (56, 58) that extends at least substantially perpendicularly in relation to the longitudinal axis (24) of the swivel arm (12) and at least substantially parallel to at least a swivel axis (50) of the swivel arm (12).

6. Power tool according to any one of the preceding claims, **characterized in that** the coupling units (20, 22), in particular the energy storage units (16, 18) coupled to the coupling units (20, 22), are arranged between the drive unit (14) and a swivel point (60) of the swivel arm (12), as viewed along the longitudinal axis (24) of the swivel arm (12).

7. Power tool according to any one of the preceding claims, **characterized in that** lateral surfaces (62, 64) of the energy storage units (16, 18), when having been coupled to the coupling units (20, 22), face toward one another, as viewed along a direction that is at least substantially parallel to the longitudinal axis (24) of the swivel arm (12).

8. Power tool according to any one of the preceding claims, **characterized in that** the energy storage units (16, 18), when having been coupled to the coupling units (20, 22), are arranged at least substantially perpendicularly in relation to the longitudinal axis (24) of the swivel arm (12), at least portionally offset in the direction of at least one workpiece support surface (38) relative to an axis of rotation (66) of the drive unit (14).

9. Power tool according to any one of the preceding claims, **characterized in that** the energy storage units (16, 18) are realized as 18-volt battery packs.

## Revendications

1. Machine-outil, en particulier tronçonneuse à scie circulaire et/ou scie à onglet, comportant au moins un bras pivotant (12), au moins une unité d'entraînement (14) disposée sur le bras pivotant (12), au moins deux unités d'accumulation d'énergie (16, 18) pouvant être montées électriquement en série, en particulier des blocs-batteries, pour une alimentation en énergie de l'unité d'entraînement (14) et au moins deux unités d'accouplement (20, 22) pour une fixation des unités d'accumulation d'énergie (16, 18) au bras pivotant (12), dans laquelle les unités d'accouplement (20, 22) sont disposées sur le bras pivotant (12) de manière décalée les unes par rapport aux autres, vues le long d'un axe longitudinal (24) du bras pivotant (12), dans laquelle l'axe longitudinal (24) du bras pivotant (12) s'étend au moins sensiblement parallèlement à des surfaces d'accouplement (26, 28), en particulier des plans d'étendue principaux, des unités d'accouplement (20, 22), **caractérisée par** au moins une surface de support de pièce à usiner (38) pour le logement d'au moins une pièce à usiner, dans laquelle les unités d'accumulation d'énergie (16, 18) peuvent être accouplées aux unités d'accouplement (20, 22) dans une direction (40) orientée de la surface de support de pièce à usiner (38) vers le bras pivotant (12), en particulier être insérées dans les unités d'accouplement (20, 22).

2. Machine-outil selon la revendication 1, **caractérisée par** au moins un logement d'outil (30) disposé sur le bras pivotant (12) pour le logement d'un outil d'usinage (32), en particulier d'une lame de scie, dans laquelle le logement d'outil (30) présente un axe de rotation (36) au moins sensiblement perpendiculaire à un plan d'outil (34) s'étendant au moins sensiblement parallèlement aux surfaces d'accouplement (26, 28), en particulier aux plans d'étendue principaux, des unités d'accouplement (20, 22).

3. machine selon la revendication 1, **caractérisée en ce que** les unités d'accumulation d'énergie (16, 18), dans un état accouplé aux unités d'accouplement (20, 22), sont disposées au moins sensiblement entièrement à l'intérieur d'une zone définie par une étendue maximale (42) de l'unité d'entraînement (14), en particulier dans un plan (44) transversal à la surface de support de pièce à usiner (38) .

4. Machine-outil selon l'une des revendications précédentes, **caractérisée en ce que** les unités d'accouplement (20, 22) présentent respectivement au moins un élément de fixation (46, 48) permettant une liaison mécanique avec les unités d'accumulation d'énergie (16, 18), lequel s'étend au moins sensiblement perpendiculairement à l'axe longitudinal (24) du bras pivotant (12) et au moins sensiblement parallèlement à au moins un axe de pivotement (50) du bras pivotant (12).

5. Machine-outil selon l'une des revendications précédentes, **caractérisée en ce que** les unités d'accouplement (20, 22) présentent chacune au moins un élément de contact (52, 54) permettant une liaison électrique aux unités d'accumulation d'énergie (16, 18), lequel présente un plan d'étendue principal (56, 58) qui s'étend au moins sensiblement perpendiculairement à l'axe longitudinal (24) du bras pivotant (12) et au moins sensiblement parallèlement à au moins un axe de pivotement (50) du bras pivotant (12).

6. Machine-outil selon l'une des revendications précédentes, **caractérisée en ce que** les unités d'accouplement (20, 22), en particulier les unités d'accumulation d'énergie (16, 18) accouplées aux unités d'accouplement (20, 22), sont disposées, vues le long de l'axe longitudinal (24) du bras pivotant (12), entre l'unité d'entraînement (14) et un point de pivotement (60) du bras pivotant (12).

7. Machine-outil selon l'une des revendications précédentes, **caractérisée en ce que** des faces latérales (62, 64) des unités d'accumulation d'énergie (16, 18), dans un état accouplé aux unités d'accouplement (20, 22), sont tournées les unes vers les autres, vues dans une direction au moins sensiblement parallèle à l'axe longitudinal (24) du bras pivotant (12).

8. Machine-outil selon l'une des revendications précédentes, **caractérisée en ce que**, dans un état accouplé aux unités d'accouplement (20, 22), les unités d'accumulation d'énergie (16, 18) sont disposées au moins sensiblement perpendiculairement à l'axe longitudinal (24) du bras pivotant (12), au moins par sections, en direction d'au moins une surface de support de pièce à usiner (38) décalée par rapport à un axe de rotation (66) de l'unité d'entraînement (14).

9. Machine-outil selon l'une des revendications précédentes, **caractérisée en ce que** les unités d'accumulation d'énergie (16, 18) sont réalisées sous forme de blocs-batteries de 18 volts.
